# EUROPEAN PATENT SPECIFICATION

(11) **EP 1 369 361 B1**
(45) Date of publication and mention of the grant of the patent: **19.01.2005**
(21) Application number: 01902432.2
(22) Date of filing: 02.02.2001
(51) Int. Cl.: B65G 1/00, B65G 60/00, B65G 61/00

(54) **METHOD AND APPARATUS FOR TRANSFERRING STACKS OF GOODS PLACED IN ORDERLY PACKAGES OCCUPYING A PRISMATIC SPACE**
VERFAHREN UND VORRICHTUNG ZUR ÜBERTRAGUNG VON IN GEORDNETEN; EINEN PRISMATISCHEN RAUM EINNEHMENDEN PAKETEN ANGEORDNETEN GÜTERSTAPELN
PROCEDE ET APPAREIL PERMETTANT DE TRANSFERER DES EMPILEMENTS DE MARCHANDISES DISPOSEES EN PAQUETS RANGES OCCUPANT UN ESPACE PRISMATIQUE

(43) Date of publication of application: 10.12.2003
(73) Proprietor: Fabregat Batlle, Josep, 25334 Castellsera (Lleida) (ES)
(72) Inventor: Fabregat Batlle, Josep, 25334 Castellsera (Lleida) (ES)
(74) Representative: Gislon, Gabriele
(86) International application number: PCT/ES2001/000024
(87) International publication number: WO 2002/060789

(56) References cited:
- EP-A1- 0 873 948
- EP-A1- 0 915 053
- DE-A- 2 131 086
- FR-A- 1 324 441
- US-A- 4 927 318
- US-A- 5 088 877
- PATENT ABSTRACTS OF JAPAN & JP 2000 053228 A (KAJIMA) 22 February 2000

## Description

### Scope of the invention

This invention refers in general to a method for power-driven and automatically transferring stacks of goods placed in orderly packages occupying a prismatic space, from a first supporting surface to a second supporting surface, and namely, to a method for transferring stacks of goods placed in orderly packages occupying a prismatic space, from a first pallet spreading on the full lower supporting face of said stack to two or more second pallets, adjacent to each other, which jointly are spreading on the whole of said lower supporting face of the stack and each separately, a fraction of said stack which can be separated.

This invention also refers to an apparatus for implementing above method.

### Technical background

Nowadays, the use of loading and carrying pallets or platforms for handling any kind of goods is fully general as it allows loading, carrying and storing significantly huge lots of such goods, each lot being orderly loaded on one of those pallets, keeping their order and with simple power-driven operations. These loading and carrying pallets or platforms have standardized sizes, often according to the sizes and proportions of the goods to be loaded, which are generally homogenous and, have either prismatic or rectangular shapes or are packed forming prismatic packages or packages which can be included in a rectangular prism, therefore the stacks of goods loaded on a pallet generally occupy a rectangular prismatic space multiple of the volume of one of the packages composing the stack.

In some storing, carrying or distributing systems, the pallets on which the stacked goods are initially received have not the kind, material, sizes or same owner than the pallets which have to be finally carried or stored, which obliges to transfer the stacks loaded on the initial pallets to the final pallets. It can be also wished , for example, to transfer a stack from a conveyor to one or more pallets, or from one or more pallets to a conveyor.

US-A-3123232 discloses a mechanism for transferring the load from a pallet based on a principle consisting in gripping the initial pallet with its load between a lower member on which the pallet initially rests and a top member linearly moving which presses the top face of the stack of packages, have the pallet with its load so gripped tilt sidewards in an over 90° angle until the set remains supported on its top face and on one of its side faces in which position the lower face is releasable. Then, an automatic operation is carried out for withdrawing or replacing the pallet and, last, the set is newly gripped between its lower and top faces and it is newly lead to its operating upright position. The apparatus is installed in an intermediate position of a power-driven roller conveyor and the portion of the conveyor corresponding to the area of the apparatus is integrated in said lower member on which the pallet initially rests and tilts with it. This process had the drawback of implying a significant mechanical complexity due to its combining tilting and linear travel , including the tilt of all the motor-driven rollers of a length of the conveyor. In addition, it requires a significant side space close to the conveyor to allow that the lowerable set tilts, such side space constituting an area of high risk of accidents for the operators, therefore it has to be duly protected.

US-A-3946880 discloses an apparatus for release goods packaged and ordered by layers, typically placed on pallets, based on a principle identical to that of the apparatus of US-A-3123232 above mentioned, although in this case, the apparatus is in addition prepared for withdrawing full layers of packages from the stack lowered over 90° and supported on its top face and on a side face returning the packages of each layer to the conveyor. This apparatus basically shares same drawbacks as those above mentioned.

A very frequent particular case is the requirement of some companies engaged in the supply or marketing of goods designed to consumption in supermarkets and large stores to transfer the stacks of packages from pallets on which they are initially loaded, which have sizes too large to be handled through the passageways of the commercial centre to other smaller pallets, in general submultiples of the initial pallets, more suitable for the requirements of handling in such centres. These operations of transferring loads are generally carried out by hand and to make them easier, the load is distributed on the pallets at least one upright subdivision plane being provided between the packages composing it, parallel to some of the side faces of the stack, the plane of which is not crossed by any package so that the stack can easily be separated into at least two fractions.

EP-A-0850845 discloses a device of pallet with a divisible load, seeking to provide a solution to the prior requirement. This device comprises a pallet divisible into smaller elements, initially linked to each other with tapes or the like. The load is organized in packages arranged in layers and according to dividing upright planes coinciding with the divisions between the elements forming the pallet. Between each layer of packages a reinforcing sheet is arranged provided with weak lines coinciding with said division planes. Cutting said links which keep the smaller elements joined which form the pallet and separating said elements, the reinforcing sheet breaks along said weak lines and the load is divided into fractions, each fraction remaining arranged on an element of the pallet. However, this method has the drawback that the goods must be originally loaded according to the device of pallets disclosed, which is usually not available to the company in charge of further storage, carriage, distribution or marketing of that goods.

EP-A-0827917 discloses a de-palletizing machine which can be built in an automatic storing system. This machine is based on the same principle above disclosed with relation to US-A-3123232 and US-A-3946880 but in this case, top and side members -on which are respectively resting the top face and a side face of the load of the pallet after it has been tilted sidewards over 90° - have been built in two parts independently driven so that they can move sidewards , being separated from each other, each part supporting a fraction of the pallet total initial load. However, this machine has the drawbacks above mentioned with relation to said US-A-3123232 and US-A-3946880 adding additional mechanisms for moving sidewards said members supporting the load.

JP-A-2000053228, on which the preamble of claims 1 and 8 is based, discloses an apparatus and a method for transferring stacks of packages by means of air pressure.

### Short explanation of the invention

This invention seeks to overcome prior drawbacks by providing a method and an apparatus for transferring stacks of goods placed in orderly packages occupying a prismatic space, from a first supporting surface to a second supporting surface. The method of the invention essentially comprises the steps of:
(a) taking and uprightly lifting at same time all the packages composing said stack, keeping their order and using for it any of the stack faces except a lower face supporting it, releasing said first supporting surface;
(b) placing said second supporting surface, free, on a place located under the lifted stack or alternatively, although it is less preferred, move the stack lifted to a place where the second supporting surface, free, is located;
(c) uprightly lower and release the stack on the second supporting surface, leaving the stack deposited on the second supporting surface with same initial order of the packages composing it.

In a particular application, in each of said stacks at least one plane for uprightly subdivided the packages composing it has been provided, said subdividing plane being parallel to some of the stack side faces and not crossed by any package, and the first supporting surface on which the stack is initially placed comprises a first pallet, while the second supporting surface on which the stack is finally placed comprises at least two second pallets, adjacent to each other, the area of the second pallets being significantly a submultiple of the area of the first pallet. The interface between said at least two second pallets coincide with said upright plane subdividing the load, so that the second pallets can be separate each supporting a corresponding fraction of the stack. In some cases, two or more stacks can be handled at same time, each initially loaded on a respective first pallet.

It must be pointed out that, in this description, the term pallet is used for designating any loading and carrying tray or platform which can be hand or mechanically handled with a lot of goods loaded on it in an organized and stabilized way including any loading tray or platform provided with wheels.

To perform the step of taking and lifting at same time all the packages composing the stack or stacks, keeping their order, the method of the invention comprises to apply a significantly even pressure simultaneously on each of the four side faces of the stack or stacks by means of four moving plates mounted on a frame which can uprightly move along a supporting structure and to lift said moving frame up to at least a height slightly over the level as well of the first as of the second supporting surfaces. In the event that stacks loaded on pallets are handled, this level corresponds to the thickness of the first and second pallets and it is sufficient to allow replacing the first by the seconds. Thereafter, to perform the step of lowering and releasing the stack or stacks on said second supporting surface, the method comprises lowering said moving frame until the lower supporting face of the stack or stacks rest on the second supporting face, releasing said pressure by means of a diverging move of the four mentioned plates, and newly lifting the moving frame until the lower edges of said plates remain at a height at least slightly over the level of a top face of the stack deposited on the second supporting surface or of a new stack loaded on the first supporting surface.

An advantage of the method of this invention stands in that the load has only to be lifted a few centimetres, according to said thickness of the pallets used, instead of the over 90° tilt of all the load carried out by the devices of the prior art, with subsequent saving of power and space this means. On the other hand, when the pallet requires to be lifted above the top face of the stacks, obviously they are empty and said move means a low power expense. Also, thanks to all of it, the method and the apparatus of this invention allows a frequency of transfers of stacks significantly greater than the devices of the prior art.

Advantageously, in the apparatus of this invention, the plates significantly includes all the surface of the respective side faces of the stacks and are internally coated with a material having a high coefficient of friction, such as an elastomeric material, which provides an adherence sufficient to safely lift the load supplying moderate forces. These moderate forces distributed on the large surface area where plates are applied provide as result pressures on the side faces of the stack sufficiently low not to damage the goods packaged in it. Programmable controlling means allow to select the pressure exerted by the plates on the side faces of the stack depending on the nature and the weight of the goods carried on it.

According to a preferred example of embodiment, the lifting apparatus implementing the method of the invention comprises above mentioned supporting structure fixed on a place where said plates can carry out said operations of taking, lifting, lowering and releasing the stacks gripping them by their four side faces. This place is crossed by a mechanical linear conveyor, such as a motor-driven roller conveyor, comprising an entrance section through which the stacks loaded on the first initial pallets arrive to that place and an exit section through which the fractions of the stack loaded on the second pallets are withdraw, automatically, and in continuous cycles. Crossing said place in a crossed direction with respect to the linear conveyor, there is arranged a transfer device which is in charge of withdrawing the first empty pallets replacing them by second also empty pallets while the stacks are kept lifted by said plates.

Another advantage of the method and the apparatus of this invention stands on the fact that the load is lifted from its supporting surface, such as a pallet, without using for it the lower supporting face thereof, which implies that there is no need of lifting the pallet together with its load nor, of course, a length of the motor-driven roller conveyor and/or the device for transferring the empty pallets, as it occurs with said devices of the prior art. On the other hand, in the method and apparatus of this invention, all the travels of the stacks are linear and are confined within a fixed supporting structure, therefore no side space is required for the conveyor to allow said travels, which saves space and increase the safety for the operators.

### Brief description of the drawings

These and other advantages, as well as other features of the method and apparatus of this invention will be more apparent from following detailed description of a preferred example of embodiment which does not limit it, the description of which includes appended drawings in which:
Fig. 1 is a plan view diagrammatically illustrating the method and the apparatus for transferring stacks of goods placed in orderly packages occupying a prismatic space of this invention;
Fig. 2 is a view in perspective showing the stack initially loaded on a single pallet;
Fig. 3 is a view in perspective showing two fractions submulitples of the stack of Fig. 4 loaded on two pallets having sizes submultiples of those of the single initial pallet, as result of an application of the method and the apparatus of this invention;
Fig. 4 is a view in perspective illustrating the method of the invention for taking and lifting one of said stacks of goods in packages implemented by four plates which may move in a convergent/divergent way;
Fig. 5 is a detailed view in perspective showing a variation for the corners of the plates of Fig. 2;
Fig. 6 is a rear elevation view taken form the side of the entrance to the apparatus of Fig. 1;
Fig. 7 is an elevation view which illustrates an enlarged detail of the plates operation and guiding;
Fig. 8 is an elevation view illustrating an enlarged detail of a device for centring the pallets loaded on the conveyor of the apparatus according to the invention;
Fig. 9 is a cross sectional view of an optional device associated to the frame supporting the plates, provided for cooperating in grasping from beneath the stack when the goods it contains have a weak pressure strength, and
Fig. 10 is a plan view from above of the structure supporting the moving frame supporting the plates.

### Detailed description of an example of preferred embodiment

The method and apparatus according to this invention is provided for transferring stacks of goods in packages orderly placed occupying a prismatic space from a first supporting surface to a second supporting surface.

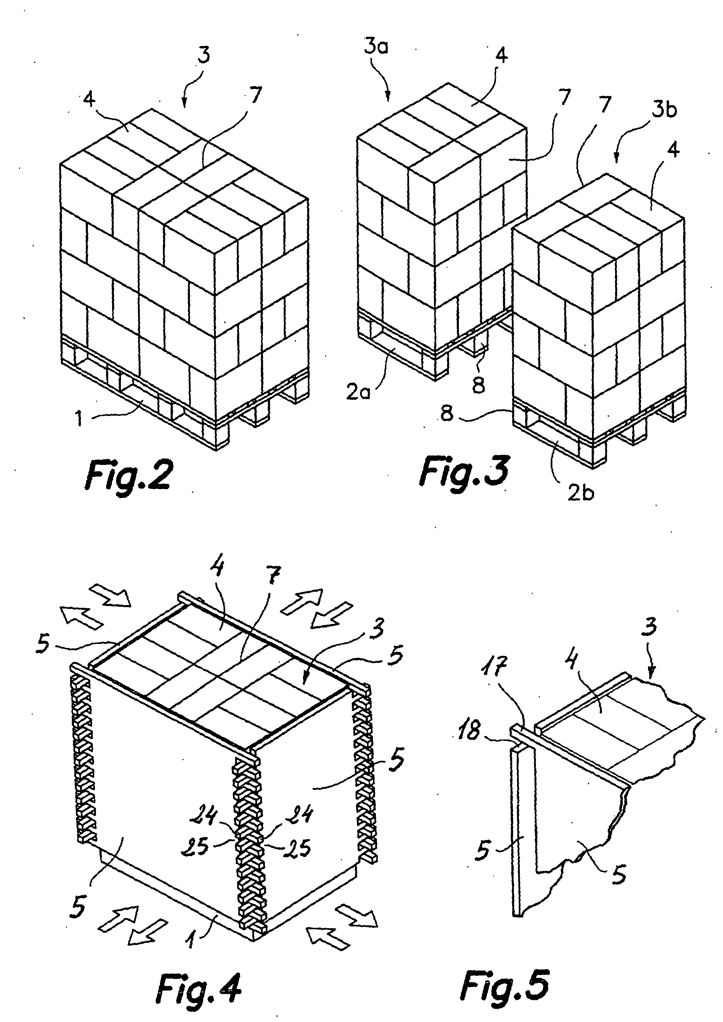

The figures show an example of embodiment applied to a particular case in which said first supporting surface, on which stack 3 is initially placed comprises a first pallet 1 (see Fig. 2) which occupies a significantly same area and same proportions as the area of a lower supporting face of stack 3, and in which the second supporting surface, on which it is wished to finally transfer stack 3, comprises at least two second pallets 2a, 2b adjacent to each other (see Fig. 3), which occupies as a whole an area significantly same and having same proportions as the area of said lower supporting face of stack 3. In each of stacks 3 initially an upright subdividing plane 7 of packages 4 has been provided which compose it, said subdividing plane 7 being parallel to one of the side faces of stack 3 and it is not crossed by any package 4. On its hand, second pallets 2a, 2b show a separating interface 8 between them both significantly aligned with said upright subdividing plane 7 of packages 4 of stack 3, so said second pallets 2a, 2b, once they have been loaded, may be separated each carrying a fraction 3a, 3b of the stack 3 loaded on it occupying a smaller rectangular prismatic space.

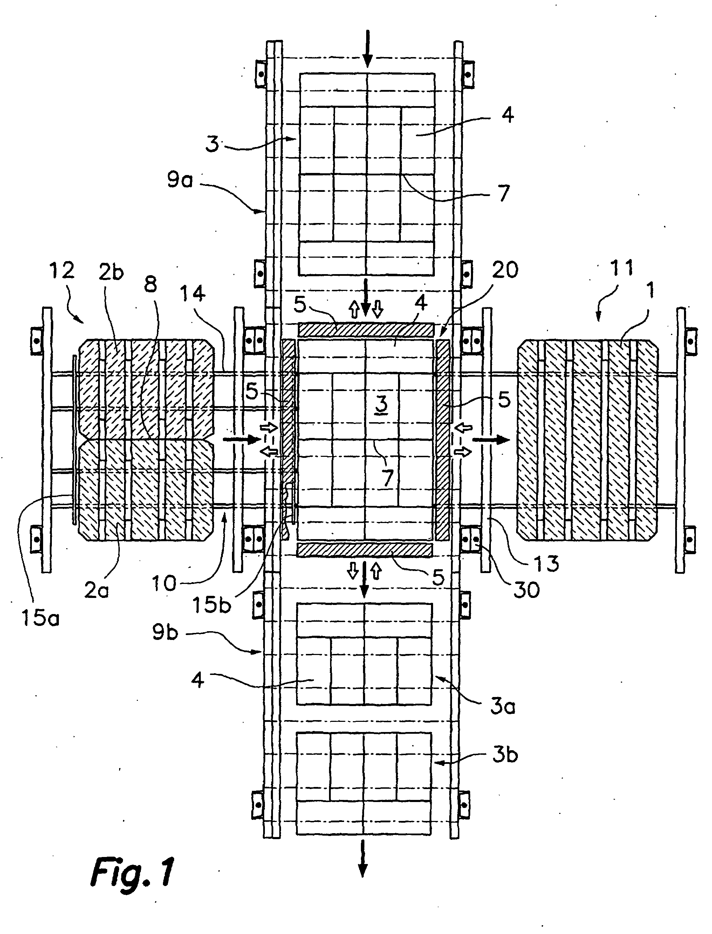

Now, referring in particular to Fig. 1, said example of embodiment of the method and apparatus of this invention is diagrammatically illustrated, said method comprising essentially following steps:
placing, by means of an automatic entrance conveyor 9a, a stack 3 initially loaded with a first pallet 1 (according to Fig. 2), at a place 20 where said stack 3 can be taken and lifted;
uprightly taking and lifting at same time all the packages 4 composing said stack 3 keeping their order and using for this plates 5 which press the side faces of stack 3 without using a lower supporting face thereof, releasing said first pallet 1 in said place 20;
while stack 3 is lifted, withdrawn, by means of an automatic transferring device 10, the first pallet 1 of said place 20 replacing them by two second pallets 2a, 2b adjacent to each other;
uprightly lower and release stack 3 on said second pallets 2a, 2b at said place 20, leaving the stack 3 deposited on them with same initial order of the packages 4 which compose it; and
withdraw from the place 20, by means of an exit automatic conveyor 9b, the second pallets 2a, 2b adjacent to each other, loaded each with a fraction 3a, 3b of the stack 3 (according to Fig. 3),
the said steps being carried out cyclically and automatically by means of an apparatus according to this invention driven by programmable controlling means.

The operations of taking and lifting at same time all the packages 4 which compose the stack 3 conserving its order are carried out as best illustrated in Fig. 4, by means of four moving plates 5, provided with upright flat faces having a high coefficient of friction arranged delimiting a rectangular prismatic space , hollow, open at the top and at the bottom which can surround the load. An arrangement and drives which will be disclosed in detail below, allow to locate each plate 5 opposite to one of said side faces of the stack 3, applying a substantially even pressure simultaneously, controlled and adapted to the nature and weight of the goods, on each of said side faces of the stack 3 by means of a converging coordinate move, of said plates 5 and lifting all the assembly keeping the pressure of plates 5 until said lower supporting face of stack 3 is at least at a slightly higher height as well to the level of the first pallet 1 as to the second pallets 2a, 2b.

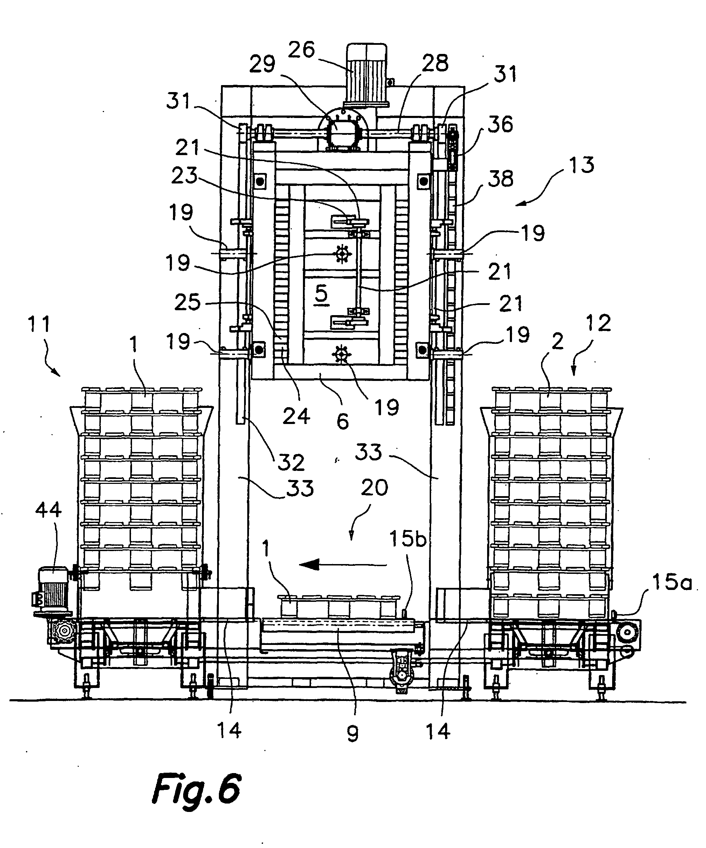

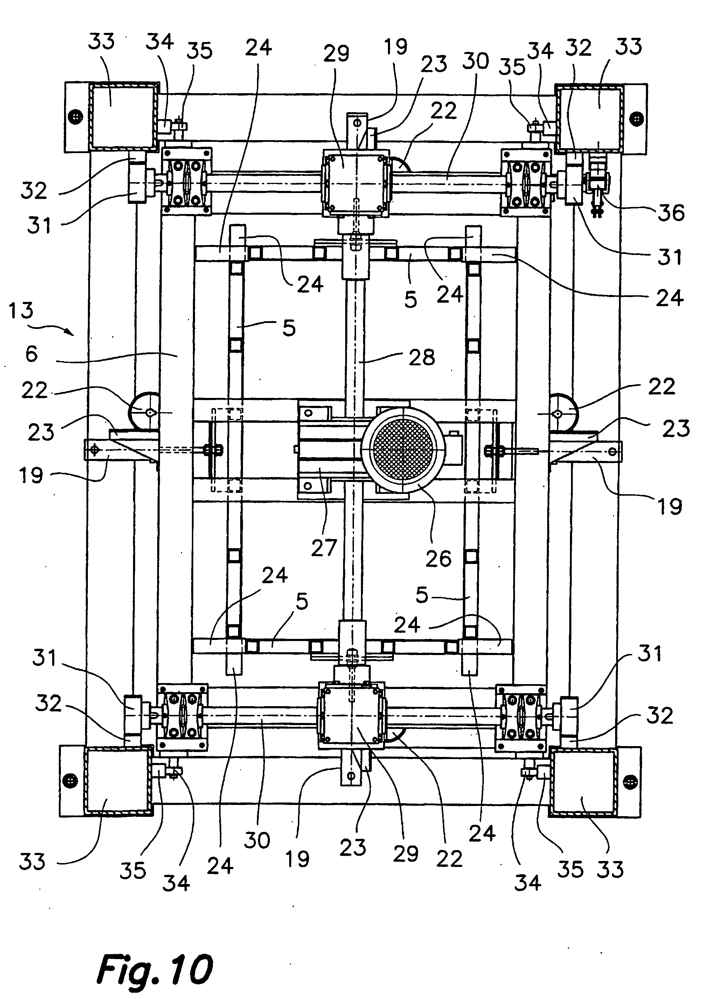

Now referring Fig. 6 and 10, it can be seen a frame 6 having a quadrangular structure within which are mounted guided and driven said four moving plates 5, said frame 6 being in turn guided and driven to uprightly move along four pillars 33 of a supporting structure 13 anchored to the ground in such a position that said four plates 5 remain on said place 20.

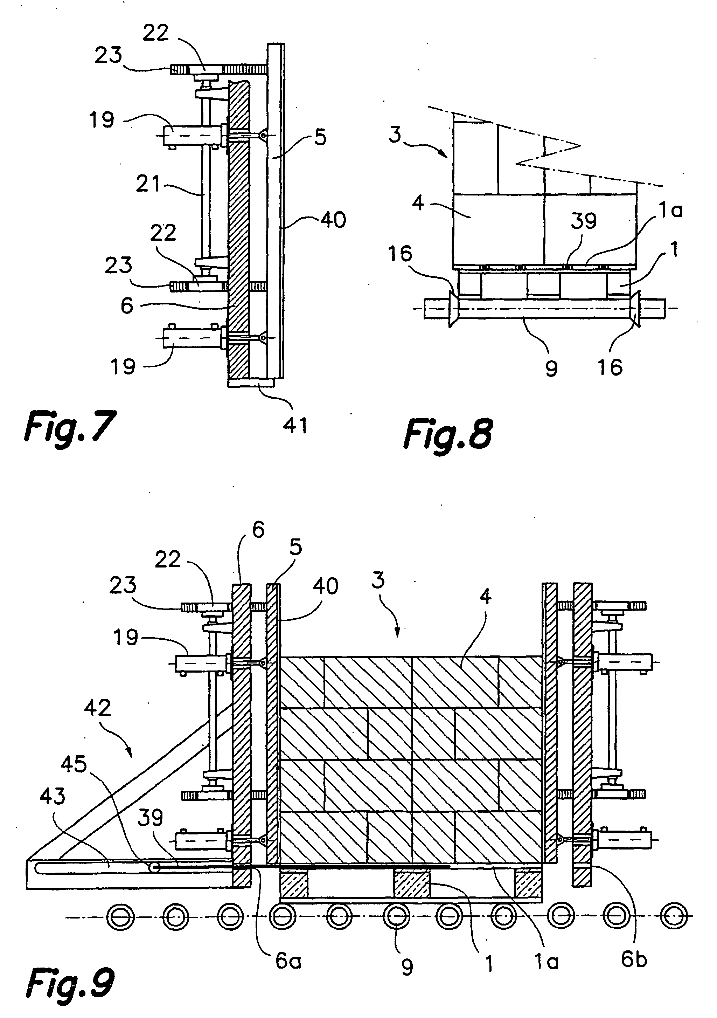

Each of such plates 5 is driven by at least one fluid dynamic cylinder 19 although preferably it will be driven by means of two or more fluid dynamic cylinders 19 located on the external face of the plate 5 perpendicularly to its mentioned flat internal face and spaced from each other. In Fig. 7 it is shown, according to an example of embodiment, a cross section of one side of the frame 6 on which are fixed two of said fluid dynamic cylinders 19 spaced from each other and preferably on a same vertical, although other arrangements would also be possible. To prevent any unwanted slope of the plate 5 with respect to the respective side face of the stack 3, for example, due to differences in the action of the cylinders 19, at least one bar 21 has been rotatably mounted on said supporting frame 6 of the plate 5, in each of the ends of the bar 21 a pinion 22 is fixed integral geared in a respective toothed bar 23 fixed perpendicularly and overhanging on the external face of the plate 5, both pinions 22 having same diameter. With this a travel of the plate 5 is assured parallel at every moment with the respective side face of the stack 3. The pressure of said fluid dynamic cylinders 19 is controlled and adapted to the nature and weight of the goods by means of programmable automatic controlling means. The plates 5, in addition to be fixed to the ends of the rods of the cylinders 19 are, according to a preferred example of embodiment, supported and guided by the lower part by appendages 41 which protrude inwardly from the lower edges of the frame 6.

With this arrangement, the plates 5 are guided and driven in order that each is capable to carry out, simultaneously with the others, a travel in a direction perpendicular to its flat face itself and in both senses, therefore said plates 5 can jointly have a convergent move until contacting and applying a substantially even pressure, simultaneously, on the surface of each of the side faces of the stack 3, gripping it without using for it a lower supporting face thereof, and divergent moves to release said contact and pressure. The frame 6 is capable to lift said plates 5 jointly with the stack 3 gripped by them until said lower supporting face of the stack 3 remains at a height at least slightly over the level as well of the first as of the second supporting surfaces, said frame 6 being also capable to lift only said plates 5 until their lower edges remain at a height at least slightly over the level of a top face of the stack 3 deposited either on the first or on the second supporting surface.

Fig. 7 also shows a layer 40 of a material having a high coefficient of friction, such as rubber, polyurethane or other elastomeric material, coating the flat face of said plates 5 designed to contact the stack 3. Preferably, the contacting face of said layer 40 having a high coefficient of friction with the side faces of the stack 3 comprises a plurality of protuberances or embossments (not shown) distributed throughout its surface to improve the coefficient of friction with respect to the stack 3. It is convenient to increase said coefficient of friction because higher it is lower can be the force exerted by the cylinders 19 against the plates 5 for obtaining a friction sufficient to take and lift the stack 3 and when lower this force will be, lower will be the pressure to which the goods and/or containers contained in the packages 4 of said stack 3 will sustain, with a best guaranty as for their safety.

With reference newly to Fig. 4, each of said plates 5 comprises a plurality of appendages 24 embedded with a plurality of incuts 25 on each of its upright edges, the appendages 24 of the edge of a plate being inserted within the incuts 24 of the edge adjacent to the other neighbouring plate and vice versa. The intersections of the appendages 25 interdigitated define, on all the corners of said hollow prismatic space, upright edges which move in a convergent or divergent way jointly with the convergent or divergent moves of the plates 5. This allows that the pressure exerted by the plates 5 includes, at every moment, absolutely all the surfaces of the side faces of the stack 3 and prevent breakages of the packages 4 due to the pressure on the separating slots which otherwise would be formed, between the plates 5 at the comers. Fig. 5 shows a variation of interaction of the plates 5 at the corners in which each two adjacent plates 5 defining a corner of said hollow prismatic space comprise at least one appendage 17 horizontally spreading from an upright edge of one of them, penetrating in an incut 18 cut on an upright edge of the other, said penetration being more marked when larger is said convergent place of the plates 5. This variation is less effective although the construction is simpler and cheaper and can result sufficient for certain values of pressure with relation with certain kinds of loads.

The said entrance and exit automatic conveyors 9a, 9b (shown in Fig. 1) are advantageously integrated in a single motor-driven rollers conveyor 9 passing by the area of said place 20 and, in order to crosswise centre the first pallets 1 and second pallets 2a, 2b, respectively loaded with stacks 3 and fractions 3a, 3b of stacks 3, specially on the area of said place 20 and adjacent areas, frustum-shaped surfaces 16 have being provided fixed close to the ends of at least some of the motor-driven rollers 9 of the conveyor separated by a gap shorter than the length of the stack 3, said frustum-shaped surfaces 16 having a slope at their central area of the roller 9, as shown in Fig. 8. The motor-driven rollers 9 of a length located at said place 20 or on the exit conveyor 9b are controlled in order that, when on said length there are two second pallets 2a, 2b loaded with respective fractions 3a, 3b of the stack 3, they are driven or stopped in a coordinate manner to make one of said loaded second pallets 2a goes onwards while the other 2b is stopped or is going onwards slowlier in order to physically take them apart.

On its side, said transfer device 10 comprises supporting members 14, for example rails defining a sliding plane for the pallets 1, 2a, 2b coplanar with the carrying plane defined by the rollers 9 and the path of which is perpendicular to the forward sense of the entrance/exit conveyor 9a, 9b and crosses the area of the place 20. Preferably, said supporting members 14 are interrupted at the area of the place 20 close to the rollers 9. The transfer device 10 comprises in addition pushing blades 15a, 15b simultaneously guided and driven which drag, sliding on said supporting members 14, respectively, the empty second pallets 2a, 2b, from a place of storage of the second pallets to said place 20 and the empty first pallets 1 from said place 20 to a place of storage of the first pallets. said pushing blades 15a, 15 b are associated to flexible traction means such as belts or chains housed in guides (not shown) which cross through the place area 20 between the rollers 9 and beneath the level thereof, being driven by a motor 44 so that the pushing blades 15a, 15b have a to-and-fro motion, with a forward move during which they drag the respective pallets 2a, 2b and 1 and an idle back motion. However, said flexible traction means could be for example driven to travel always in a same direction, with a longer dragging path and an idle back motion by the lower part of the roller conveyor 9.

As shown in Fig. 6, said place for storing second pallets preferably comprises a store 12 for empty second pallets 2a, 2b, adjacent to each other and stacked, and a mechanical device for lifting all the second pallets 2a, 2b of the stack 12 except the pallet having the lower level which is dragged by said pushing blade 15a to said place 20, while said place for storing first pallets comprises a store 11 for empty first pallets stacked and a mechanical device for lifting all the first pallets 1 of the stack 11 sufficiently high to be able to receive, at the lower level of the stack 11, a first pallet 1 dragged by said pushing blade 15b from said place 20. The stores of the empty and stacked first and second pallets 11 and 12 are of a kind known per se and available in the commerce.

Referring now specially to Fig. 10, it shows said frame 6 on which are mounted plates 5, formed by a quadrangular casing at the top part of which a motor 26 is fixed for driving the upright travel of the frame 6. Such motor 26 rotatably drives, through a reducer, a bar 28 crossing throughout the frame 6, such bar 28 is connected by its two ends through feedbacks 29, with respective bars 30 horizontally mounted in such a way they can rotate on two opposite sides of the frame 6. At each end of each of the bars 30 a pinion 31 is fixed integral with them geared with a respective toothed bar 32 fixed in upright position (see also Fig. 6) along each of said four pillars 33 forming part of said supporting structure 13. said four toothed bars 32 are arranged in first faces of the pillars 33, facing each other, two by two, while in second faces facing each other , two by two, of said four pillars 33 guiding rails 34 are fixed on which respective wheels 35 run mounted so that the can freely rotate on the frame 6. Thus, the moves of the frames are restricted in any direction on the horizontal plane by the sets of the pinions 31 and toothed bars 32 and guiding rails 34 and wheels 35, while in the upright direction it can travel in both senses driven and controlled by the motor 26.

As a safety device against an eventual unwanted descent of the frame 6 and plates 5 associated, on the frame 6 there is mounted a fluid dynamic cylinder 36 the rod of which when driven, moves a pawl 37 which is interlocked in an additional toothed bar 38 uprightly fixed along one of the pillars 33, blocking the upright travel of the frame 6. said fluid dynamic cylinder 36 is prepared for being automatically driven at least in the case of a power supply fail in said motor 26.

For some very concrete applications in which loads having specially low strength to the pressure have to be handled, and which are at same time light-weighed, it has been foreseen to grip the load with the plates with a suitable moderate pressure and, to prevent the involuntary fall of some of the packages 4, namely those located at the central area of the stack, it has available, in addition, as shown in Fig. 9, a plurality of rods 39 beneath said lower supporting face of the stack 3 passing them from passing holes 6a on the lower edge of a first side of the frame 6 along separating gaps between plates 1a (see also Fig. 8) defining the top floor of the first pallet 1 until interlocking in fixing holes 6b close to a lower edge of a second opposite side of the frame 6. For this, in said first side of the frame 6 a support 42 is mounted to which are horizontally fixed guides 43 through which are moving ends of a cross bar 45 to which are fixed all said rods 39 by some of their ends the other ends remaining free to permanently pass through said passing holes 6a. On the support 42 are disposed driving means (not shown) of the cross bar 45 to jointly move all the rods 39.

The apparatus according to this invention is driven by controlling means programmed in order that said travels of the plates 5 and frame 6, as well as the drive of the automatic entrance and exit conveyors 9a and 9b and transfer device 10 are carried out in a coordinated, cyclic and automatic manner in order to carry out said transfer of stacks 3 from said first pallet 1 to said second pallets 2a, 2b, in a coordinated, cyclic and automatic manner. As it was mentioned above, the entrance conveyor 9a and the exit conveyor 9b define a single carrying plane including said place 20 and in fact it can be a single conveyor which crosses beneath the supporting structure of the frame 6 and plates 5, the controlling means being capable to drive said single conveyor as a simple conveyor of stacks 3 without driving said frame 6 and plates 5 to carry out said steps of transfer of the load.

The invention being sufficiently disclosed in order a man of the art may apply it, it is stated that it would be possible to introduce many variations and modifications to it without being beyond the scope of this invention, the scope of which is defined by following claims.

## Claims

1. Method for transferring stacks of packages placed in orderly packages occupying a prismatic space, from a first supporting surface to a second supporting surface, comprising the steps of:
(a) placing by means of an entrance automatic conveyor (9a) the stack (3) on said first supporting surface at a place (20) where the stack (3) can be taken and lifted by lifting and lowering means;
(b) lifting by means of said lifting and lowering means the stack (3) leaving the first supporting surface empty, replacing by means of an automatic transferring device (10) the empty first supporting surface with a empty second supporting surface while the stack (3) is kept lifted by said lifting and lowering means, and then lowering the stack (3) on said second supporting surface at the place (20);
(c) withdrawing by means of an exit automatic conveyor (9b) the stack (3) on the second supporting surface from the place (20),
**characterized in that** the steps of lifting and lowering the stack (3) comprise taking and vertically lifting at same time all the packages (4) composing said stack (3), keeping their order and using for it at least vertical side faces of the stack (3) except a lower face supporting it, by lowering four movable plates (5) having vertical flat surfaces mounted on a frame (6) vertically movable about a fixed supporting structure (13) located at the place (20) without interfering with the packages (4) until locating each plate (5) opposite to one of said side faces of the stack (3), applying with plates (5) a controlled pressure adapted to the nature and weigh of the packages (4) simultaneously on each of side faces of the stack (3) by means of a convergent, coordinate travel of the plates (5) and lifting said moving frame (6) keeping the pressure of the plates (5), and then vertically lowering and releasing the stack (3) on said second supporting surface by lowering said moving frame (6) until resting the lower rest face of the stack (3) on the second supporting surface and releasing said pressure by means of a divergent move of said plates (5), the steps (a) to (c) being carried out in a coordinate, cyclic and automatic manner by means of driving means controlled by programmable controlling means.

2. Method, according to the claim 1, **characterized in that** said stack (3) has a rectangular prismatic configuration and has provided at least a vertical plane (7) subdividing the packages composing it, said subdividing plane (7) being parallel to some of the side faces of the stack (3) and not crossed by any package (4), the second supporting surface comprising at least two second pallets (2a,2b) adjacent to each other, jointly occupying an area substantially same and having same sizes as the area of said lower rest face of the stack (3), and show at least a separating interface (8) between them, substantially aligned with said at least one vertical subdividing plane (7) of the packages (4) of stack (3), therefore said at least two second pallets (2a,2b) once they are loaded may be separated each bearing a fraction (3a, 3b) of the stack (3) loaded thereon occupying a smaller rectangular prismatic space.

3. Method, according to the claim 2, **characterized in that** the first supporting surface on which is initially placed the stack (3) comprises a first pallet (1) occupying an area substantially same and having same sizes as the area of said lower supporting area of the stack (3).

4. Method, according to claim 1, **characterized in that**, in those case in which the load has a low pressure strength, after the step (d) and before or during the first stage of step (a) it is added the additional stage to arrange a plurality of rods (39) beneath said lower rest face of the stack (3) passing them from passing holes (6a) close to a lower edge of a side of the frame (6) through separating gaps between plates (1a) defining the top floor of the first pallet (1) until interlocking in fixing holes (6b) close to a lower edge of an opposite side of the frame (6).

5. Method, according to claim 1, **characterized in that** said entrance conveyor (9a) and said exit conveyor (9b) define a single carrying plane including said place (20) said carrying plane can be temporarily used as simple stacks (3) conveyor without performing the steps (a) to (f) of load transfer.

6. Method, according to claim 1, **characterized in that** said automatic transfer device (10) transfers the second pallets (2a, 2b) from a store (12) of second pallets (2a, 2b) to said place (20).

7. Method, according to claim 1, **characterized in that** said automatic transfer device (10) simultaneously transfers the first pallet (1) from said place (20) to a store (11) of first pallets (1) and the second pallets (2a, 2b) from a store (12) of second pallets (2a, 2b) to said place (20).

8. Apparatus for transferring stacks of packages arranged in orderly packages occupying a prismatic space, comprising:
an entrance automatic conveyor (9a) adapted to locate said stack (3) on said first supporting surface at a place (20) located beneath lifting and lowering means adapted to lift the stack (3) leaving said first supporting surface empty and then lower and release the stack (3) on an empty second supporting surface;
an automatic transfer device (10) adapted to replace the empty first supporting surface by said empty second supporting surface at said place (20) when the stack (3) is kept lifted by said lifting and lowering means;
and an exit automatic conveyor (9b) adapted to withdraw from said place (20) the second supporting surface loaded with the stack (3),
**characterized in that** said lifting and lowering means comprises four movable plates (5) having vertical flat faces arranged to delimit a hollow prismatic space open at bottom and top thereof to surround the stack (3), said plates (5) being mounted on a frame (6) and driven to simultaneously carry out a convergent travel until contacting and applying a pressure simultaneously on side surfaces of the stack (3) in order to grip it without using a lower rest face thereof, and to carry out divergent travels to release said contact and pressure, said frame (6) being guided and driven to vertically travel along a fixed supporting structure (13) to lift and lower said plates (5) alone or together with the stack (3) gripped thereby, and programmable controlling means being provided to control driving means of plates (5), frame (6), entrance and exit automatic conveyors (9a, 9b) and transfer device (10) in a coordinate, cyclic and automatic manner in order to carry out said transfer of stacks (3) from first supporting surfaces to second supporting surfaces in a cyclic and automatic manner.

9. Apparatus, according to claim 8, **characterized in that** said stack (3) has a rectangular prismatic configuration and said order of the packages (4) comprises an vertical plane (7) subdividing said packages (4), said subdividing plane (7) being parallel to some of the side faces of the stack (3) and not crossed by any package (4), the second supporting surface comprising at least two second pallets (2a, 2b), adjacent to each other, which occupies jointly an area substantially equal and having same proportions as the area of said lower rest face of the stack (3) and show at least a separating interface (8) between them substantially aligned with said at least one vertical subdividing plane (7) of the packages (4) of the stack (3), thereby said at least two second pallets (2a, 2b) once loaded, are susceptible to be separated each bearing a fraction (3a, 3b) of the stack (3) loaded on it occupying a smaller rectangular prismatic space.

10. Apparatus, according to claim 9, **characterized in that** the first supporting surface comprises a first pallet (1) which occupies an area substantially equal and with same proportions as the area of said lower rest face of the stack (3), said automatic transfer device (10) being adapted to withdraw the first pallet (1) when empty from said place (20) and to replace it with two of said empty second pallets (2a, 2b) adjacent to each other when the stack (3) is lift.

11. Apparatus, according to claim 8, **characterized in that**, in those cases in which the load has a low pressure strength, it is provided further to the pressure plates (5) a plurality of rods (39) connected to mechanical means adapted to place said rods (39) under said lower rest face of the stack (3) moving them together through passing holes (6a) close to a lower edge of a side of the frame (6) along separating gaps between plates (1a) defining the top floor of the first pallet (1) until free ends of said rods (39) interlock in fixing holes (6b) close to a lower edge of a side opposite to the frame (6).

12. Apparatus, according to claim 8, **characterized in that** said vertical flat faces of the movable plates (5) have a high coefficient of friction.

13. Apparatus, according to claim 8, **characterized in that** said entrance and exit automatic conveyors (9a, 9b) are integrated in a single motor-driven roller conveyor (9) passing on the area of said place (20) and **in that** said transfer device (10) comprises supporting members (14) defining a transfer plane coplanar with a carrying plane defined by the rollers (9) and the path of which crosses the area of the place (20) and a guided and driven pushing blade (15a) which drags the empty second pallets (2a, 2b) sliding on said supporting members (14) from a storing place to said place (20), said storing place for the second pallets comprising a store (12) for empty second pallets (2a, 2b), stacked adjacent to each other and a mechanical device for lifting all the second pallets (2a, 2b) of the stack (12) except the pallets at the lowest level, which are dragged by said pushing blade (15a) to said place (20).

14. Apparatus, according to claim 8, **characterized in that** said entrance and exit automatic conveyors (9a, 9b) are integrated in a single motor-driven roller conveyor (9) passing at the area of said place (20) and **in that** said transfer device (10) comprises supporting members (14) which define a transfer plane coplanar with a carrying plane defined by the rollers (9) and the path of which crosses the area of the place (20), and simultaneously guided and driven pushing blades (15a, 15b) which drag, sliding on said supporting members (14) respectively the empty second pallets (2a, 2b) from the place for storing the empty second pallets to said place (20) and the empty first pallets (1), from said place (20) to a place for storing the first pallets, the place for storing the second pallets comprising a store (12) for empty second pallets (2a, 2b) stacked adjacent to each other, and a mechanic device for lifting all the second pallets (2a, 2b) of the stack (12) except the pallets at a lowest level, which are dragged by said pushing blade (15a) to said place (20), and **in that** said place for storing the first pallets comprises a store (11) for empty first pallets, stacked, and a mechanical device for lifting at the first pallets (1) of the stack (11) sufficiently high to be able to receive, at the lowest level of the stack (11) a first pallet (1) dragged by said pushing blade (15b) from said place (20).

15. Apparatus, according to the claim 13 or 14, **characterized in that** said pushing blades (15a) or (15a, 15b) are associated to flexible traction means, such as belts or chains suitably guided, driven by a motor so that they make a to-and-fro travel, with a forwards dragging travel and an idle back travel or a cyclic move in a single direction along a closed circuit, with a dragging travel and an idle back travel.

16. Apparatus, according to claim 13 or 14, **characterized in that**, in at least one length of said motor-driven roller conveyor (9), including an area adjacent to said place (20), at least some of said motor-driven rollers (9) separated from each other by a distance lower than the length of the pallet comprise, close to their ends, frustum-shaped surfaces (16) with a slope to its central area, for crosswise centring the first pallets (1) and second pallets (2a,2b) respectively loaded with stacks (3) and fractions (3a,3b) of stacks (3).

17. Apparatus, according to claim 8, **characterized in that** each of said plates (5) are driven by at least a fluid dynamic cylinder (19) located on the external face of the plate (5), perpendicularly to its mentioned flat internal face, and at least a bar (21) is rotatably mounted on said frame (6) supporting the plate (5), in each of the ends of which bar (21) is fixed integral a pinion (22) geared in a respective toothed bar (23) perpendicularly fixed overhanging at points spaced from the external face of the plate (5), both pinions (22) having same diameter to prevent an unwanted slope of the plate (22) with respect to the side face of the stack (3), said programmable automatic controlling means being arranged to adapt the pressure of said at least one fluid dynamic cylinder (19) to the nature and weight of the packages.

18. Apparatus, according to the claim 12, **characterized in that** each of said plates (5) has its related flat face contacting the stack (3) covered with a layer (40) of a material having a high coefficient of friction, such as rubber, a polyurethane or another elastomeric material.

19. Apparatus, according to claim 18, **characterized in that** one face of said layer (40) of a material having a high coefficient of friction, contacting with the side faces of the stack (3), comprises a plurality of protuberances or embossments distributed on the whole of its surface to improve the coefficient of friction with respect to the stack (3).

20. Apparatus, according to claim 8, **characterized in that** each two adjacent plates (5) define a comer of said hollow prismatic space, and comprise at least an appendage (17) horizontally extended from an vertical edge of one of them, penetrating in an incut (18) cut in an vertical edge of the other, said penetration being to a larger extent as longer is said convergent travel of the plates (5).

21. Apparatus, according to the claim 8, **characterized in that** each of said plates (5) comprises a plurality of appendages (24) embedded in a plurality of incuts (25) in each of their vertical edges, the appendages (24) of the edge of a plate being inserted in the incuts (24) of the adjacent edge of another neighbouring plate and vice versa, the intersections of the appendages (25) interdigitated defining, at all the corners of said hollow prismatic space, vertical edges which move in a convergent or divergent manner jointly with the convergent or divergent travels of the plate (5).

22. Apparatus, according to claim 8, **characterized in that** said frame (6) on which the plates (5) are mounted comprises a quadrangular casing at the top part of which a motor (26) is fixed for driving the vertical travel of the frame (6), said motor (26) rotatably drives, through a reducer (27) a bar (28) crossing through the frame (6), said bar (28) being connected by its two ends, through back travels (29) to respective bars (30) horizontally mounted, in a manner in which they can rotate, on two opposite sides of the frame (6) at each end of each of said bars (30) a pinion (31) is mounted integral, geared in a respective toothed bar (32) fixed vertically along each of four pillars (33) which form part of said supporting structure (13), said four toothed bars (32) being on first faces of said pillars (33) facing each other, two by two, being fixed on second faces facing each other two by two of the four pillars (33) guiding rails (34) on which respective wheels (35) are running mounted so that they can freely rotate on the frame (6).

23. Apparatus, according to the claim 8, **characterized in that** on the frame (6) is mounted a fluid dynamic cylinder (36) to move a pawl (37) adapted to interlock in an additional toothed bar (38) vertically fixed along a pillar (33) forming part of the supporting structure (13) blocking the vertical travel of the frame (6), the fluid dynamic cylinder (36) being arranged to be automatically driven at least in the case of a failure in the power supply of said motor (26).

## Patentansprüche

1. Verfahren zur Überführung von gestapelten Packungen, die sich in geordneten Packungen befinden, die einen prismatischen Raum einnehmen, von einer ersten Tragfläche zu einer zweiten Tragfläche, das folgende Schritte umfasst:
a) Ablegen des Stapels (3) mittels eines automatischen Einlaufförderers (9a) auf der ersten Tragfläche an einer Stelle (20), an der der Stapel (3) mittels Hebe- und Senkmitteln aufgenommen und angehoben werden kann;
b) Anheben des Stapels (3) mittels der Hebe- und Senkmittel, wodurch die erste Tragfläche geleert wird, Austausch der leeren ersten Tragfläche mittels einer automatischen Überführungsvorrichtung (10) gegen eine leere zweite Tragfläche, während der Stapel (3) mittels der Hebe- und Senkmittel im angehobenen Zustand gehalten wird, und anschließendes Absenken des Stapels (3) auf die zweite Tragfläche an der Stelle (20);
c) Entfernen des Stapels (3) von der Stelle (20) auf der zweiten Tragfläche mittels eines automatischen Auslaufförderers (9b),
**dadurch gekennzeichnet, dass** das Anheben und Absenken des Stapels (3) dadurch erfolgt, dass alle Packungen (4), aus denen der Stapel (3) besteht, gleichzeitig aufgenommen und senkrecht angehoben werden, indem man ihre Reihenfolge beibehält und hierzu zumindest die senkrechten Seitenflächen des Stapels (3) außer einer diesen stützenden Bodenfläche benutzt, und vier bewegliche Platten (5) mit senkrechten ebenen Flächen, die an einem Rahmen (6) befestigt sind, der senkrecht um eine feststehende Trägerstruktur (13) beweglich ist, die sich an der Stelle (20) befindet, absenkt, ohne die Packungen (4) zu beeinflussen, bis die jeweilige Platte (5) sich gegenüber einer der Seitenflächen des Stapels (3) befindet, wobei mittels der Platten (5) jede der Seitenflächen des Stapels (3) durch eine konvergente koordinierte Bewegung der Platten (5) und Anheben des beweglichen Rahmens (6) zur Aufrechterhaltung des Drucks der Platten (5) gleichzeitig mit einem entsprechend der Art und des Gewichts der Packungen (4) geregelten Druck beaufschlagt wird, und anschließend der Stapel (3) senkrecht abgesenkt und auf der zweiten Tragfläche freigegeben wird, indem man den beweglichen Rahmen (6) absenkt, bis die Bodenauflagefläche des Stapels (3) auf der zweiten Tragfläche ruht und den Druck durch eine divergente Bewegung der Platten (5) ablässt, wobei die Schritte (a) bis (c) mittels eines durch programmierbare Steuermittel gesteuerten Antriebsmittels koordiniert, zyklisch und automatisch erfolgen.

2. Verfahren nach Anspruch 1, **dadurch gekennzeichnet, dass** der Stapel (3) eine rechtwinklige prismatische Struktur besitzt und zumindest eine senkrechte Ebene (7) aufweist, durch die die Packungen, aus denen sie besteht, unterteilt werden, wobei die Unterteilungsebene (7) parallel zu einigen der Seitenflächen des Stapels (3) verlaufen und von keiner Packung (4) geschnitten wird, wobei die zweite Tragfläche mindestens zwei zueinander benachbarte zweite Paletten (2a, 2b) aufweist, die zusammen eine im wesentlichen gleiche Fläche einnehmen und genau so groß sind wie die Fläche der Bodenauflagefläche des Stapels (3) und dazwischen zumindest eine Trennlinie (8) aufweisen, die im wesentlichen zu mindestens einer senkrechten Unterteilungsebene (7) der Packungen (4) des Stapels (3) ausgerichtet ist, wodurch die zumindest zwei zweiten Paletten (2a, 2b) nach dem Beladen getrennt werden können, wobei jede einen Bruchteil (3a, 3b) des darauf geladenen Stapels (3) trägt und einen geringeren rechtwinkligen prismatischen Raum einnimmt.

3. Verfahren nach Anspruch 2, **dadurch gekennzeichnet, dass** die erste Tragfläche, auf der der Stapel (3) zuerst abgestellt wird, eine erste Palette (1) aufweist, die im wesentlichen die gleiche Fläche einnimmt und genau so groß ist wie die Fläche der Bodentragfläche des Stapels (3).

4. Verfahren nach Anspruch 1, **dadurch gekennzeichnet, dass** in jenen Fällen, bei denen die Last eine geringe Druckfestigkeit aufweist, nach dem Schritt (d) und vor oder während der ersten Phase des Schritts (a) ein zusätzlicher Schritt eingefügt wird, der darin besteht, dass man mehrere Stangen (39) unter der Bodenauflagefläche des Stapels (3) anbringt und sie von den Durchgangsbohrungen (6a) näher zu einer Bodenkante einer Seite des Rahmens (6) durch Trennspalten zwischen den Platten (1a) hindurch verschiebt, durch die die oberste Lage der ersten Palette ( 1 ) definiert ist, bis sie in Befestigungslöchern (6b) nahe einer Bodenkante einer gegenüberliegenden Seite des Rahmens (6) einrasten.

5. Verfahren nach Anspruch 1, **dadurch gekennzeichnet, dass** der Einlaufförderer (9a) und der Auslaufförderer (9b) eine einzelne Tragebene unter Einschluss der Stelle (20) definieren, wobei die Tragebene vorübergehend als einfacher Förderer für Stapel (3) ohne Durchführung der Lastüberführungsschritte (a) bis (f) eingesetzt werden kann.

6. Verfahren nach Anspruch 1, **dadurch gekennzeichnet, dass** mit der automatischen Überführungsvorrichtung (10) die zweiten Paletten (2a, 2b) von einem Lager (12) für die zweiten Paletten (2a, 2b) zu der Stelle (20) überführt werden.

7. Verfahren nach Anspruch 1, **dadurch gekennzeichnet, dass** mit der automatischen Überführungsvorrichtung (10) die erste Palette (1) von der Stelle (20) in ein Lager (11) für die ersten Paletten (1) und gleichzeitig die zweiten Paletten (2a, 2b) von einem Lager (12) für die zweiten Paletten (2a, 2b) zu der Stelle (20) überführt werden.

8. Vorrichtung zur Überführung von gestapelten Packungen, die in geordneten Packungen angeordnet sind, die einen prismatischen Raum einnehmen, die folgendes umfasst:
einen automatischen Einlaufförderer (9a), mit dem der Stapel (3) auf der ersten Tragfläche an einer Stelle (20) abgestellt werden kann, die sich unterhalb von Hebe- und Senkmitteln befindet, mit denen der Stapel (3) angehoben und somit die erste Tragfläche geleert wird, und anschließend der Stapel (3) gesenkt und auf einer leeren zweiten Tragfläche freigegeben wird;
eine automatische Überführungsvorrichtung (10), mit der die leere erste Tragfläche an der Stelle (20) gegen eine leere zweite Tragfläche ausgetauscht werden kann, wenn der Stapel (3) durch die Hebe- und Senkmittel im angehobenen Zustand gehalten wird;
sowie einen automatischen Auslaufförderer (9b), mit dem die mit dem Stapel (3) beladene zweite Tragfläche von der Stelle (20) entfernt werden kann, **dadurch gekennzeichnet, dass** die Hebe- und Senkmittel vier bewegliche Platten (5) mit senkrechten ebenen Flächen aufweisen, die so angeordnet sind, dass sie einen unten und oben offenen, den Stapel (3) umgebenden hohlen prismatischen Raum abgrenzen, wobei die Platten (5) an einem Rahmen (6) befestigt sind und derart angetrieben werden, dass sie gleichzeitig eine konvergente Bewegung ausführen, bis sie an den Seitenflächen des Stapels (3) anliegen und diese gleichzeitig mit einem Druck beaufschlagen, so dass sie diesen ohne Hilfe deren Bodenauflagefläche greifen und divergente Bewegungen ausführen können, wodurch das Anliegen aufgehoben und der Druck abgelassen werden, wobei der Rahmen (6) geführt und angetrieben wird, wodurch er eine senkrechte Bewegung entlang einer feststehenden Trägerstruktur (13) ausführt, wodurch die Platten (5) allein oder zusammen mit dem dadurch festgehaltenen Stapel (3) angehoben oder gesenkt werden, und programmierbare Steuermittel zur koordinierten, zyklischen und automatischen Steuerung der Steuermittel für die Platten (5), den Rahmen (6), den automatischen Einlauf- und Auslaufförderer (9a, 9b) und die Überführungsvorrichtung (10) vorgesehen sind, damit die Überführung der Stapel (3) von der ersten Tragfläche zur zweiten Tragfläche zyklisch und automatisch erfolgt.

9. Vorrichtung nach Anspruch 8, **dadurch gekennzeichnet, dass** der Stapel (3) eine rechtwinklige prismatische Struktur besitzt und die Ordnung der Packungen (4) eine senkrechte Ebene (7) aufweist, durch die die Packungen (4) unterteilt werden, wobei die Unterteilungsebene (7) parallel zu einigen der Seitenflächen des Stapels (3) verlaufen und von keiner Packung (4) geschnitten wird, wobei die zweite Tragfläche mindestens zwei zueinander benachbarte zweite Paletten (2a, 2b) aufweist, die zusammen eine im wesentlichen gleiche Fläche einnehmen und genau so groß sind wie die Fläche der Bodenauflagefläche des Stapels (3) und dazwischen zumindest eine Trennlinie (8) aufweisen, die im wesentlichen zu mindestens einer senkrechten Unterteilungsebene (7) der Packungen (4) des Stapels (3) ausgerichtet sind, wodurch die zumindest zwei zweiten Paletten (2a, 2b) nach dem Beladen getrennt werden können, wobei jede einen Bruchteil (3a, 3b) des darauf geladenen Stapels (3) trägt und einen geringeren rechtwinkligen prismatischen Raum einnimmt.

10. Vorrichtung nach Anspruch 9, **dadurch gekennzeichnet, dass** die erste Tragfläche eine erste Palette (1) aufweist, die im wesentlichen die gleiche Fläche einnimmt und die gleichen Abmessungen aufweist wie die Fläche der Bodenauflagefläche des Stapels (3), wobei die automatische Überführungsvorrichtung (10) so beschaffen ist, dass sie die erste Palette (1), sobald sie leer ist, von der Stelle (20) entfernt und sie beim Anheben des Stapels (3) gegen zwei der leeren zueinander benachbarten zweiten Paletten (2a, 2b) austauscht.

11. Vorrichtung nach Anspruch 8, **dadurch gekennzeichnet, dass** in jenen Fällen, bei denen die Last eine geringe Druckfestigkeit aufweist, zusätzlich zu den Druckplatten (5) mehrere Stangen (39) vorgesehen sind, die mit mechanischen Mitteln verbunden sind, wodurch die Stangen (39) unter der Bodenauflagefläche des Stapels (3) positioniert werden können, wobei sie zusammen durch Durchgangsbohrungen (6a) nahe einer Bodenkante einer Seite des Rahmens (6) durch Trennspalten zwischen den Platten (1a) hindurch verschoben werden, durch die die oberste Lage der ersten Palette (1) definiert ist, bis die freien Enden der Stangen (39) in Befestigungslöchern (6b) nahe einer Bodenkante einer gegenüberliegenden Seite des Rahmens (6) einrasten.

12. Vorrichtung nach Anspruch 8, **dadurch gekennzeichnet, dass** die senkrechten ebenen Flächen der beweglichen Platten (5) einen hohen Reibungskoeffizienten aufweisen.

13. Vorrichtung nach Anspruch 8, **dadurch gekennzeichnet, dass** der automatische Einlauf- und Auslaufförderer (9a, 9b) in einen einzigen motorgetriebenen Rollenförderer (9) integriert sind, der an dem Bereich der Stelle (20) vorbeiführt, und dass die Überführungsvorrichtung (10) Stützglieder (14), durch die eine mit einer durch die Rollen (9) festgelegten Tragebene koplanare Überführungsebene definiert ist, deren Weg den Bereich der Stelle (20) kreuzt, sowie ein geführtes und angetriebenes Schubschild (15a) aufweist, durch das die auf den Stützgliedern (14) gleitenden leeren zweiten Paletten (2a, 2b) von einer lagerstelle an die Stelle (20) gezogen werden, wobei die Lagerstelle für die zweiten Paletten ein Lager (12) für die leeren zueinander benachbart gestapelten zweiten Paletten (2a, 2b) und eine mechanische Vorrichtung zum Anheben aller zweiten Paletten (2a, 2b) des Stapels (12) aufweist, außer den Paletten auf der niedrigsten Stufe, die von dem Schubschild (15a) an die Stelle (20) gezogen werden.

14. Vorrichtung nach Anspruch 8, **dadurch gekennzeichnet, dass** der automatische Einlauf- und Auslaufförderer (9a, 9b) in einen einzigen motorgetriebenen Rollenförderer (9) integriert sind, der an dem Bereich der Stelle (20) vorbeiführt, und dass die Überführungsvorrichtung (10) Stützglieder (14), durch die eine mit einer durch die Rollen (9) festgelegten Tragebene koplanare Überführungsebene definiert ist, deren Weg den Bereich der Stelle (20) kreuzt, sowie gleichzeitig geführte und angetriebene Schubschilder (15a, 15b) aufweist, die jeweils auf den Stützgliedern (14) gleitend die leeren zweiten Paletten (2a, 2b) von der Stelle zur Lagerung der leeren zweiten Paletten an die Stelle (20) und die leeren ersten Paletten (1) von der Stelle (20) zu einer Stelle zur Lagerung der ersten Paletten ziehen, wobei die Lagerstelle für die zweiten Paletten ein Lager (12) für die leeren zueinander benachbart gestapelten zweiten Paletten (2a, 2b) und eine mechanische Vorrichtung zum Anheben aller zweiten Paletten (2a, 2b) des Stapels (12) aufweist, außer den Paletten auf der niedrigsten Stufe, die von dem Schubschild (15a) an die Stelle (20) gezogen werden, und dass die Stelle zur Lagerung der ersten Paletten ein Lager (11) für gestapelte leere erste Paletten und eine mechanische Vorrichtung zum Anheben der ersten Paletten (1) des Stapels (11) aufweist, und zwar so hoch, dass auf der niedrigsten Stufe des Stapels (11) eine durch das Schubschild (15b) von der Stelle (20) gezogene erste Palette (1) aufgenommen werden kann.

15. Vorrichtung nach Anspruch 13 oder 14, **dadurch gekennzeichnet, dass** die Schubschilder (15a) bzw. (15a, 15b) mit flexiblen Zugmitteln, wie z.B. entsprechend geführte Riemen oder Ketten, in Verbindung stehen, die von einem Motor so angetrieben werden, dass sie eine Hin- und Herbewegung ausführen, mit einer ziehenden Vorwärtsbewegung und einer Rückwärtsbewegung im Leerlauf oder einer zyklischen Bewegung in einer Richtung entlang eines geschlossenen Kreislaufs mit einer ziehenden Bewegung und einer Rückwärtsbewegung im Leerlauf.

16. Vorrichtung nach Anspruch 13 oder 14, **dadurch gekennzeichnet, dass** zumindest in einem Abschnitt des motorgetriebenen Rollenförderers (9), einschließlich eines Bereichs neben der Stelle (20), wobei die motorgetriebenen Rollen (9), zumindest teilweise voneinander durch einen kleineren Abstand getrennt sind, als der Länge der Palette entspricht, nahe deren Enden kegelstumpfförmige Flächen (16) mit einer Neigung in Richtung ihres Mittelbereichs aufweisen, wodurch die jeweils mit Stapeln (3) und Bruchteilen (3a, 3b) von Stapeln (3) beladenen ersten (1) und zweiten Paletten (2a, 2b) kreuzweise zentriert werden können.

17. Vorrichtung nach Anspruch 8, **dadurch gekennzeichnet, dass** die Platten (5) jeweils durch mindestens einen flüssigkeitsdynamischen Zylinder (19) angetrieben werden, der sich an der Außenfläche der Platte (5) senkrecht zu deren erwähnter ebener Innenfläche befindet, und dass mindestens eine Stange (21) drehbar auf dem die Platte (5) tragenden Rahmen (6) gelagert ist, wobei an den Enden der Stange (21) integral ein Ritzel (22) befestigt ist, das von einer entsprechenden Zahnradstange (23) angetrieben wird und an Stellen, die von der Außenfläche der Platte (5) beabstandet ist, senkrecht überhängend befestigt ist, wobei beide Ritzel (22) den gleichen Durchmesser aufweisen, damit eine nicht gewollte Neigung der Platte (22) bezüglich der Seitenfläche des Stapels (3) verhindert wird, wobei das programmierbare automatische Steuermittel so angeordnet ist, dass der Druck des zumindest einen flüssigkeitsdynamischen Zylinders (19) an die Art und das Gewicht der Packungen angepasst werden kann.

18. Vorrichtung nach Anspruch 12, **dadurch gekennzeichnet, dass** bei der jeweiligen Platte (5) deren am Stapel (3) anliegende ebene Fläche mit einer Schicht (40) aus einem Material mit hohem Reibungskoeffizienten, wie z.B. Gummi, Polyurethan oder einem anderen Elastomermaterial, beschichtet ist.

19. Vorrichtung nach Anspruch 18, **dadurch gekennzeichnet, dass** eine Seite der Schicht (40) aus einem Material mit hohem Reibungskoeffizienten, die an den Seitenflächen des Stapels (3) anliegt, mehrere Ausstülpungen und Ausbuchtungen aufweist, die auf der gesamten Oberfläche zur Verbesserung des Reibungskoeffizienten bezüglich des Stapels (3) verteilt sind.

20. Vorrichtung nach Anspruch 8, **dadurch gekennzeichnet, dass** zwei benachbarte Platten (5) eine Ecke des hohlen prismatischen Raums definieren und mindestens einen Ansatz (17) aufweisen, der sich horizontal von einer senkrechten Kante einer der Platten erstreckt und in einen Einschnitt (18) eindringt, der in eine senkrechte Kante der anderen Platte geschnitten ist, wobei das Eindringen umso weiter erfolgt, je länger die konvergente Bewegung der Platten (5) ist.

21. Vorrichtung nach Anspruch 8, **dadurch gekennzeichnet, dass** die Platten (5) jeweils mehrere Ansätze (24) aufweisen, die in mehrere Einschnitte (25) jeweils in deren senkrechte Kanten eingelassen sind, wobei die Ansätze (24) der Kante einer Platte in die Einschnitte (24) der benachbarten Kante einer weiteren benachbarten Platte und umgekehrt eingelassen sind, wobei die Schnittpunkte der ineinander gegriffenen Ansätze (25) an allen Ecken des hohlen prismatischen Raums senkrechte Kanten definieren, die sich zusammen mit den konvergenten oder divergenten Bewegungen der Platte (5) konvergent oder divergent bewegen.

22. Vorrichtung nach Anspruch 8, **dadurch gekennzeichnet, dass** der Rahmen (6), an dem die Platten (5) befestigt sind, ein viereckiges Gehäuse aufweisen, an dessen oberem Teil ein Motor (26) befestigt ist, mit dem die senkrechte Bewegung des Rahmens (6) bewerkstelligt wird, wobei der Motor (26) über ein Reduktionsgetriebe (27) eine Stange (28) drehend antreibt, die durch den Rahmen (6) geht, wobei die Stange (28) an ihren zwei Enden über Rückbewegungen (29) mit entsprechenden horizontal befestigten Stangen (30) so verbunden ist, dass diese sich an zwei gegenüber liegenden Seiten des Rahmens (6) drehen können, wobei an jedem Ende der Stangen (30) ein Ritzel (31) integral befestigt ist, das jeweils von einer Zahnradstange (32) angetrieben wird, die jeweils entlang der vier Pfeiler (33), die einen Teil der Trägerstruktur (13) bilden, senkrecht befestigt ist, wobei die vier Zahnradstangen (32) sich jeweils zu zweit an den ersten Flächen der Pfeiler (33) gegenüber stehen und an den zweiten Flächen jeweils zwei der vier Führungsschienen (34) der Pfeiler (33) gegenüber stehend befestigt sind, an denen jeweilige Räder (35) montiert laufen, so dass sie am Rahmen (6) frei drehbar sind.

23. Vorrichtung nach Anspruch 8, **dadurch gekennzeichnet, dass** am Rahmen (6) ein flüssigkeitsdynamischer Zylinder (36) befestigt ist, mit dem eine Sperrklinke (37) bewegt werden kann, die in eine zusätzliche Zahnradstange (38) einrasten kann, die entlang eines Pfeilers (33), der einen Teil der Trägerstruktur (13) bildet, senkrecht befestigt ist, wodurch die senkrechte Bewegung des Rahmens (6) blockiert wird, wobei der flüssigkeitsdynamische Zylinder (36) so angeordnet ist, dass er zumindest bei Ausfall der Spannungsversorgung des Motors (26) automatisch angetrieben wird.

## Revendications

1. Méthode pour transférer des piles de paquets situés bien rangés occupant un espace prismatique, d'une première surface de support à une deuxième surface de support, comprenant les phases de:
(a) placer au moyen d'un transporteur automatique d'entrée (9a) la pile (3) sur cette première surface de support à un endroit (20) où la pile (3) peut être ramassée et élevée par des moyens d'élévation et de descente;
(b) élever, avec ces moyens d'élévation et de descente, la pile (3) en laissant la première surface de support vide, remplacer, au moyen d'un premier dispositif de transfert automatique (10) la première surface de support vide par une deuxième surface de support vide pendant que la pile (3) reste élevée par ces moyens d'élévation et de descente et ensuite descendre la pile (3) sur cette deuxième surface de support à l'endroit (20);
(c) retirer au moyen d'un transporteur de sortie automatique (9b) la pile (3) de la deuxième surface de support à l'endroit (20),
**caractérisée en ce que** les phases d'élévation et de descente de la pile (3) comporte ramasser et élever verticalement en même temps tous les paquets (4) composant cette pile (3) en conservant leur ordre et en utilisant à cet effet au moins des faces latérales verticales de la pile (3) sauf une face inférieure qui la supporte, en descendant quatre plaques mobiles (5) ayant des surfaces plates verticales montée sur un châssis (6) verticalement mobile sur une structure de support fixe (13) située à l'endroit (20) sans interférer avec les paquets (4) jusqu'à situer chaque plaque (5) opposée à une de ces faces latérales de la pile (3) en appliquant avec les plaques (5) une pression contrôlée adaptée à la nature et au poids des paquets (4) simultanément sur chaque face latérale de la pile (3) au moyen d'une course coordonnée convergente des plaques (5) et élever cette structure mobile (6) en conservant la pression des plaques (5) et ensuite descendre verticalement et lâcher la pile (3) sur cette deuxième surface de support en faisant descendre ce châssis mobile (6) jusqu'à ce qu'il repose la face de repos inférieure de la pile (3) sur la deuxième surface de support et en éliminant cette pression au moyen du mouvement divergent de ces plaques (5), les phases (a) à (c) étant mises en oeuvre de façon coordonnée, cyclique et automatique par des moyens de commande contrôlés par des moyens de contrôle programmables.

2. Méthode conformément à la revendication 1, **caractérisée en ce que** cette pile (3) a une configuration prismatique rectangulaire et possède au moins un plan vertical (7) sous-divisant les paquets qui la compose, ce plan de sous-division (7) étant parallèle à certaines de ces faces latérales de la pile (3) et n'étant traversée par aucun paquet (4), la deuxième surface de support comportant au moins deux deuxièmes palettes (2a, 2b) adjacentes l'une de l'autre, occupant conjointement une aire sensiblement la même et ayant les mêmes dimensions que l'aire de cette face de repos inférieure de la pile (3) et ayant au moins une interface (8) entre elles, sensiblement alignée avec cet au moins un plan vertical de sous-division (7) des paquets (4) de la pile (3) de sorte qu'au moins deux deuxièmes palettes (2a, 2b) lorsqu'elles ont été chargées, peuvent être séparées chacune supportant une fraction (3a,3b) de la pile (3) chargée sur elles occupant un espace prismatique rectangulaire plus petit.

3. Méthode conformément à la revendication 2, **caractérisée en ce que** la première surface de support sur laquelle est initialement placée la pile (3) comprend une première palette (1) occupant une aire sensiblement la même et ayant les mêmes dimensions que l'aire de cette aire de support inférieure de la pile (3).

4. Méthode conformément à la revendication 1, **caractérisée en ce que** dans le cas où la charge aurait une résistance faible à la pression, après la phase (d) et avant ou durant la première étape de la phase (a), on ajoute l'étape supplémentaire pour aménager une pluralité de tiges (39) au-dessous de cette face de repos inférieure de la pile (3) en les faisant passer par des trous traversants (6a) près d'un bord inférieur d'un des côté du châssis (6) à travers des espaces entre les plaques (1a) définissant le plancher supérieur de la première palette (1) jusqu'à s'enclencher dans les trous de fixation (6b) près d'un bord inférieur d'un côté opposé du châssis (6).

5. Méthode conformément à la revendication 1, **caractérisée en ce que** ce transporteur d'entrée (9a) et ce transporteur de sortie (9b) définissent un seul plan de transport comportant cet endroit (20), ce plan de transport peut être provisoirement utilisé comme transporteur de simples piles (3) sans mettre en place les phases (a) à (f) du transfert des charges.

6. Méthode conformément à la revendication 1, **caractérisé en ce que** ce dispositif de transfert automatique (10) transfère les deuxièmes palettes (2a, 2b) d'un dépôt (12) de deuxièmes palettes (2a, 2b) à cet endroit (20).

7. Méthode conformément à la revendication 1, **caractérisée en ce que** ce dispositif de transfert automatique (10) transfère simultanément la première palette (1) de cet endroit (20) à un dépôt (11) de première palettes (1) et les deuxièmes palettes (2a, 2b) d'un dépôt (12) de deuxièmes palettes (2a, 2b) à cet endroit (20).

8. Appareil pour transférer des piles de paquets aménagés en des paquets bien rangés occupant un espace prismatique, comportant:
un transporteur d'entrée automatique (9a) adapté pour placer cette pile (3) sur cette première surface de support à un endroit (20) situé au-dessous des moyens d'élévation et de descente adapté pour élever la pile (3) en laissant cette première surface de support vide et ensuite descendre et lâcher la pile (3) sur une deuxième surface de support vide;
un dispositif de transfert automatique (10) adapté pour remplacer la première surface de support vide par cette deuxième surface de support vide à cet endroit (20) lorsque la pile (3) est maintenue élevée par ces moyens d'élévation et de descente;
et un transporteur de sortie automatique (9b) adapté pour retirer de cet endroit (20) la deuxième surface de support sur laquelle est chargée la pile (3),
**caractérisée en ce que** ces moyens d'élévation et de descente comprennent quatre plaques mobiles (5) ayant des faces plates verticales aménagées pour délimiter un espace prismatique creux ouvert à ses parties du fond et du haut pour entourer la pile (3), ces plaques (5) étant montées sur un châssis (6) et commandées pour simultanément mettre en place une course convergente jusqu'à entrer en contact et appliquer une pression simultanément sur les surfaces latérales de la pile (3) afin de la saisir sans utiliser sa face inférieure de repos et mettre en place des courses divergentes pour dégager ce contact et relâcher cette pression, ce châssis (6) étant guidé et commandé pour se déplacer verticalement le long d'une structure de support fixe (13) pour élever et descendre ces plaques (5) séparément ou ensemble avec la pile (3) saisie de cette façon, et des moyens de contrôle programmables étant prévus pour contrôler des moyens de commande des plaques (5), châssis (6), transporteurs d'entrée et de sortie automatiques (9a, 9b) et dispositif de transfert (10) de façon coordonnée, cyclique et automatique afin de mettre en place ce transfert de piles (3) des premières surfaces de support aux deuxièmes surfaces de support de façon cyclique et automatique.

9. Appareil, conformément à la revendication 8, **caractérisé en ce que** cette pile (3) a une configuration prismatique rectangulaire et ce rangement des paquets (4) comporte un plan vertical (7) sous-divisant ces paquets (4), ce plan de sous-division (7) étant parallèle à certaines de ces faces latérales de la pile (3) et n'étant traversée par aucun paquet (4), la deuxième surface de support comportant au moins deux deuxièmes palettes (2a, 2b) adjacentes l'une de l'autre, occupant conjointement une aire sensiblement la même et ayant les mêmes proportions que l'aire de cette face de repos inférieure de la pile (3) et ayant au moins une interface (8) entre elles, sensiblement alignée avec cet au moins un plan vertical de sous-division (7) des paquets (4) de la pile (3) de sorte qu'au moins deux deuxièmes palettes (2a, 2b) lorsqu'elles ont été chargées, sont susceptibles d'être séparées chacune supportant une fraction (3a,3b) de la pile (3) chargée sur elles occupant un espace prismatique rectangulaire plus petit.

10. Appareil, conformément à la revendication 9, **caractérisé en ce que** la première surface des supports comporte une première palette (1) occupant une aire sensiblement la même que l'aire de cette face de repos inférieure de la pile (3), ce dispositif de transfert automatique (10) étant adapté pour retirer la première palette (1) de cet endroit (20), lorsqu'elle est vide, et de la remplacer par deux de ces deuxièmes palettes vides (2a, 2b) adjacentes l'une de l'autre lorsque la pile (3) est élevée.

11. Appareil, conformément à la revendication 8, **caractérisé en ce que**, dans le cas où la charge aurait une résistance faible à la pression, il est pourvu, en plus des plaques de pression (5) d'une pluralité de tiges (39) reliées à des moyens mécaniques aptes pour placer ces tiges (39) au-dessous de cette face de repos inférieure de la pile (3) en les faisant passer par des trous traversants (6a) près d'un bord inférieur d'un des côtés du châssis (6) le long d'espaces de séparation entre les plaques (1 a) définissant le plancher supérieur de la première palette (1) jusqu'à ce que les extrémités libres de ces tiges (39) s'enclenchent dans les trous de fixation (6b) près d'un bord inférieur d'un côté opposé du châssis (6).

12. Appareil, conformément à la revendication 8, **caractérisé en ce que** ces faces plates verticales des plaques mobiles (5) ont un coefficient de friction élevé.

13. Appareil, conformément à la revendication 8, **caractérisé en ce que** ces transporteurs d'entrée et de sortie automatiques (9a, 9b) sont intégrés dans un seul transporteur (9) à roulettes actionné par un moteur qui passe sur l'aire de cet endroit (20) et **en ce que** ce dispositif de transfert (10) comprend des membres de support (14) définissant un plan de transfert coplanaire avec un plan de transport défini par les roulettes (9) et dont la trajectoire traverse l'aire de l'endroit (20) et une lame-poussoir guidée et commandée (15a) qui entraîne les deuxièmes palettes vides (2a, 2b) en les faisant coulisser sur ces membres de support (14) depuis un endroit de stockage jusqu'à cet endroit (20), cet endroit de stockage pour les deuxièmes palettes comportant un dépôt (12) pour des deuxièmes palettes vides (2a, 2b), empilées adjacentes les unes des autres et un dispositif mécanique pour élever toutes les deuxièmes palettes (2a, 2b) de la pile (12) excepté les palettes du niveau inférieur qui sont entraînées par cette lame-poussoir (15a) à cet endroit (20).

14. Appareil, conformément à la revendication 8, **caractérisé en ce que** ces transporteurs d'entrée et de sortie automatiques (9a, 9b) sont intégrés dans un seul transporteur à roulettes (9) actionné par un moteur passant sur l'aire de cet endroit (20) et **en ce que** ce dispositif de transfert (10) comprend des membres de support (14) qui définissent un plan de transfert coplanaire avec un plan de transport défini par les roulettes (9) et la trajectoire qui traverse l'aire de l'endroit (20) et simultanément des lames de poussée guidées et commandées (15α, 15b) qui entraînent en coulissant sur ces membres de support (14) respectivement les deuxièmes palettes vides (2a, 2b) de l'endroit de stockage des deuxièmes palettes vides à cet endroit (20) et les premières palettes vides (1), de cet endroit (20) à l'endroit pour stocker les premières palettes, l'endroit pour stocker les deuxièmes palettes comportant un dépôt (12) pour les deuxièmes palettes vides (2a, 2b) empilées adjacentes l'une de l'autre, et un dispositif mécanique pour élever toutes les deuxièmes palettes (2a, 2b) de la pile (12) excepté les palettes du niveau inférieur, qui sont entraînées par ces lames de poussée (15a) à cet endroit (20) et **en ce que** cet endroit pour stocker les premières palettes comprend un dépôt (11) pour des premières palettes vides empilées, et un dispositif mécanique pour élever les premières palettes (1) de la pile (11) suffisamment haut pour permettre de recevoir, au niveau inférieur de la pile (11) une première palette (1) entraînée par cette lame-poussoir (15b) de cet endroit (20).

15. Appareil, conformément à la revendication 13 ou 14, **caractérisé en ce que** ces lames de poussée (15a) ou (15a, 15b) sont associées à des moyens de traction flexibles, tels que des bandes ou des chaînes convenablement guidées, entraînées par un moteur de sorte qu'elles fassent une course d'aller-retour, avec une course d'entraînement en avant et une course de recul à vide ou bien un mouvement cyclique dans une seule direction le long d'un circuit fermé, avec une course d'entraînement et une course de recul à vide.

16. Appareil, conformément à la revendication 13 ou 14, **caractérisé en ce que**, sur au moins un tronçon de ce transporteur à roulettes (9) actionné par un moteur, comportant une aire adjacente à cet endroit (20), au moins certaines de ces roulettes (9) actionnées par un moteur, écartées les unes des autres par une distance inférieure à la longueur de la palette comporte, près de leurs extrémités, des surfaces tronconiques (16) ayant une pente vers leur aire centrale, pour centrer transversalement les premières palettes (1) et les deuxièmes palettes (2a, 2b) respectivement chargées de piles (3) et des fractions (3a, 3b) de piles (3).

17. Appareil, conformément à la revendication 8, **caractérisé en ce que** chacune de ces plaques (5) sont entraînées par au moins un cylindre hydrodynamique (19) situé sur la face externe de la plaque (5), perpendiculaire à sa face interne plate, et au moins une barre (21) est montée tournante sur ce châssis (6) supportant la plaque (5) à chacune des extrémités de cette barre (21) se trouve fixé solidaire un pignon (22) enclenché avec une barre dentée respective (23) fixée perpendiculaire en encorbellement à des points écartés de la face externe de la plaque (5), les deux pignons (22) ayant le même diamètre pour empêcher une pente non souhaitée de la plaque (22) par rapport à la face latérale de la pile (3), ces moyens de contrôle programmables automatiques étant agencés pour adapter la pression de ce au moins un cylindre hydrodynamique (19) à la nature et au poids des paquets.

18. Appareil, conformément à la revendication 12, **caractérisé en ce que** chacune de ces plaques (5) a sa face plate correspondante en contact avec la pile (3) couverte d'une couche (40) d'un matériau ayant un coefficient de friction élevé, tel que du caoutchouc, du polyuréthanne ou un autre matériau élastomère.

19. Appareil, conformément à la revendication 18, **caractérisé en ce qu'**une face de cette couche (40) de matériau ayant un coefficient de friction élevé, en contact avec les faces latérales de la pile (3), comprend une pluralité de protubérances ou de bosses distribuées sur toute sa surface pour améliorer le coefficient de friction par rapport à la pile (3).

20. Appareil, conformément à la revendication 8, **caractérisé en ce que** chacune des deux plaques adjacentes (5) définit un coin de cet espace prismatique creux, et comporte au moins un appendice (17) horizontalement étendu depuis un bord vertical d'un d'eux, pénétrant dans une entaille (18) pratiquée sur un bord vertical de l'autre, cette pénétration étant aussi profonde que la course convergente des plaques (5) sera longue.

21. Appareil conformément à la revendication 8, **caractérisée en ce que** chacune de ces plaques (5) comprend une pluralité d'appendices (24) encastrés dans une pluralité d'entailles (25) dans chacun de leurs bords verticaux, les appendices (24) du bord de la plaque étant insérés dans les entailles (24) du bord adjacent d'une autre plaque voisine et vice versa, les intersections des appendices (25) entrecroisées définissant dans tous les coins de cet espace prismatique creux, des bords verticaux qui se déplacent de façon convergente ou divergente conjointement avec les courses convergentes ou divergentes de la plaque (5).

22. Appareil conformément à la revendication 8, **caractérisé en ce que** ce châssis (6) sur lequel les plaques (5) sont montées comportent un carter quadrangulaire à la partie supérieure duquel un moteur (26) est fixé pour entraîner la course verticale du châssis (6), ce moteur (26) entraînant en rotation, à travers un réducteur (27), une barre (28) traversant le châssis (6), cette barre (28) étant reliée par ses deux extrémités, par des courses de recul (29) aux barres respectives (30) horizontalement montées, de sorte qu'elles puissent tourner, sur les deux côtés opposés du châssis (6) à chaque extrémité de chacune de ces barres (30) un pignon (31) est monté solidaire, enclenché avec une barre dentée correspondante (32) fixée verticalement le long de chacun des quatre piliers (33) faisant partie de cette structure de support (13), ces quatre barres dentées (32) se trouvant sur des premières faces de ces piliers (33) se faisant face, deux par deux, étant fixées sur des deuxièmes faces se faisant face, deux par deux, des quatre piliers (33); des coulisses de guidage (34) sur lesquelles des roues respectives (35) sont montées de sorte qu'elles puissent tourner librement sur le châssis (6).

23. Appareil conformément à la revendication 8, **caractérisé en ce que** sur le châssis (6) est monté un cylindre hydrodynamique (36) pour déplacer un cliquet (37) apte pour s'enclencher avec une barre dentée supplémentaire (38) verticalement fixée le long d'un pilier (33) faisant partie de la structure de support (13) bloquant la course verticale du châssis (6), le cylindre hydrodynamique (36) étant agencé pour être automatiquement entraîné au moins dans le cas de coupure de courant à ce moteur (26).
